# EUROPÄISCHE PATENTSCHRIFT

(11) **EP 2 026 425 B1**
(45) Veröffentlichungstag und Bekanntmachung des Hinweises auf die Patenterteilung: **21.01.2015**
(21) Anmeldenummer: 08164410.6
(22) Anmeldetag: 05.03.2001
(51) Int. Cl.: H01R 25/14

(54) **Stromschienensystem**
Electricity rail system
Système de rail conducteur

(30) Priorität: 24.05.2000 DE 10025646
(43) Veröffentlichungstag der Anmeldung: 18.02.2009
(62) Teilanmeldung aus: 01917064.6
(73) Patentinhaber: Zumtobel Lighting GmbH, 6850 Dornbirn (AT)
(72) Erfinder: Ladstätter, Gerald, 6833 Klaus (AT); Gadner, Wolfgang, 6912 Hörbranz (AT)
(74) Vertreter: Thun, Clemens

(56) Entgegenhaltungen:
- EP-A- 0 312 871
- EP-A- 0 344 703
- DE-A- 19 539 958
- DE-U- 8 211 526
- US-A- 3 181 102
- US-A- 3 832 673

## Beschreibung

Die vorliegende Erfindung betrifft ein Stromschienensystem für Leuchten nach dem Oberbegriff des Anspruches 1.

Stromschienensysteme oder Lichtbänder finden in vielfältiger Form Verwendung, da sie gegenüber fest installierten oder eingebauten Leuchten eine hohe Flexibilität bei der individuellen Planung von Beleuchtungsstrukturen für spezifische Anforderungen bieten. So bestehen die Stromschienensysteme aus mehreren einzelnen Elementen, die nach dem Baukasten-Prinzip zusammengesetzt werden, so daß die gesamte Anordnung an die zu beleuchtenden Räumlichkeiten angepaßt werden kann. Es sind Lichtbandsysteme bekannt, mit denen nicht nur zweidimensionale, sondern auch dreidimensionale Strukturen gebildet werden können.

Das Grundgerüst eines Stromschienensystems wird durch Tragschienen gebildet, die zu der gewünschten Struktur zusammengesetzt werden und der Halterung der Stromversorgungs- und Steuerleitungen sowie der einzelnen Leuchten dienen. Die Tragschienen müssen daher eine hohe Stabilität besitzen und bestehen üblicherweise aus Metall. Sie können unterschiedliche Formen aufweisen, beispielsweise sind Tragschienen mit einem Y-Profil oder einem A-Profil bekannt. Am weitesten verbreitet sind allerdings U-förmige Tragschienen, welche mit ihrem Mittelschenkel an einem Träger, z.B. einer Raumdecke oder Raumwand befestigt werden. An den Tragschienen werden die einzelnen Leuchten-Module befestigt, wobei üblicherweise die Länge einer einzelnen Tragschiene ein Vielfaches der Länge der Leuchten-Module beträgt. Beispielsweise werden Tragschienen mit einer Länge von 3 m oder 4,50 m angeboten, wenn die Leuchten-Module eine Länge von 1,50 aufweisen. Derartige ganzzahlige Längenverhältnisse werden gewählt, um die Planung bei der Gestaltung eines Lichtbandsystems zu vereinfachen.

Um die Stromversorgung für die Leuchten sicher zu stellen, verlaufen an oder innerhalb der Tragschienen entsprechende Leitungen. Zusätzlich können neben den Leitungen zur Stromversorgung auch weitere Leitungen für die Übertragung von Steuersignalen vorgesehen sein, wodurch sich die Möglichkeit eröffnet, bei Verwendung eines geeigneten Steuersystems die einzelnen Leuchten individuell anzusteuern und zu dimmen.

Bei einem bekannten Lichtbandsystem, das von der Anmelderin unter der Bezeichnung "Lichtbandsystem ZX" vertrieben wird, verlaufen die Leitungen in Form einer Durchgangsverdrahtung innerhalb der U-förmigen Tragschienen, wobei in regelmäßigen Abständen, die der Länge der Leuchten-Module entsprechen, Abgriffbuchsen angeordnet sind. Die Abgriffbuchsen werden in die Tragschienen eingeklemmt, wobei Hinterschneidungen entsprechende nach innen gerichtete Vorsprünge der Tragschienen hintergreifen. An den durch die Abgriffbuchsen vorgegebenen Stellen können die Leuchten-Module montiert werden, indem sie auf die nach unten offenen Tragschienen aufgesetzt und befestigt werden. Die Kontaktierung der Leitungen erfolgt über ein an den Leuchten-Modulen befindliches Kontaktierungselement, welches Anschlußkontakte aufweist, die beim Aufsetzen des Leuchten-Moduls auf die Tragschiene in Öffnungen der Abgriffbuchse eingreifen und dabei mit den entsprechenden Drähten in Kontakt treten. Ferner weisen die Leuchten-Module Drehknebel auf, welche nach dem Aufsetzen verdreht werden und dabei für eine mechanische Befestigung an den Tragschienen sorgen.

Bei dem eben beschriebenen Stromschienensystem können die Leuchten-Module jeweils nur an den Stellen angeordnet werden, die durch die Abgriffbuchsen vorgegeben sind, da andernfalls keine elektrische Kontaktierung möglich ist. Um solche Einschränkungen zu vermeiden und damit eine größere Flexibilität für der Anordnung der einzelnen Leuchten zu erhalten, wurden Stromschienensysteme entwickelt, welche ein von den Tragschienen gehaltenes Stromleitprofil aufweisen. Dieses Stromleitprofil besteht aus länglichen Körpern aus nicht-leitendem Material - üblicherweise Kunststoff - mit in Längsrichtung der Tragschienen verlaufenden und von einer Kontaktierungsseite her zugänglichen Nuten zur Aufnahme von Drähten für die Stromversorgung und/oder Übertragung von Steuersignalen. Da in diesem Fall die nicht-isolierten Drähte zumindest über die Länge eines einzelnen Stromleitprofil-Körpers zu der Kontaktierungsseite hin offen liegen, kann innerhalb dieses Bereichs eine Leuchte an beliebiger Stelle angeordnet werden, so daß eine größere Freiheit bei der Planung und Realisierung des Lichtbandsystems besteht.

Ein derartiges Stromschienensystem mit U-förmigen Tragschienen, an deren Seitenwänden in Längsrichtung Stromleiter verlaufen, ist aus der DE 197 06 865 A1 bekannt. Die in unterschiedlicher Höhe angeordneten Stromleiter haben unterschiedliche Funktion. Beispielsweise können einige der Leiter zum Anschließen der Leuchten an ein Standardnetz verwendet werden, während andere Stromleiter Bestandteil eines Notstrom-Versorgungssystems sind. Durch eine entsprechende Kontaktierung dieser Stromleiter kann somit einer an das Stromschienensystem angeschlossenen Leuchte eine bestimmte Funktion zugewiesen werden. In der DE 197 06 865 A1 erfolgt dabei das Kontaktieren mit Hilfe eines Adapters, der in die Öffnung der Tragschiene von unten eingeschoben und anschließend um ca. 90° verdreht wird. An der Außenseite des Adapters sind Kontaktstifte vorgesehen, welche durch das Verdrehen gegen die Drähte des Stromschienensystems in Anlage gebracht werden. Um eine wahlweise Kontaktierung der verschiedenen Drähte zu ermöglichen, besitzt der Adapter in unterschiedlichen Höhen angeordnete Öffnungen, in welche die Kontaktstifte eingesetzt werden können. Dies bedeutet, daß zum Wechseln der gewünschten Kontaktierung für eine Leuchte die Kontaktstifte zunächst ausgebaut und anschließend wieder neu eingesetzt werden müssen, was relativ aufwendig ist.

Aus der EP 0 344 703 A2 ist eine U-förmige Stromentnahmeschiene bekannt, an deren Innenseiten elektrische Leiter in einem Isolierstoffprofil gehaltert sind. Weiterhin ist ein Adapter vorgesehen, der zur elektrischen Kontaktierung in den durch die Stromentnahmeschiene gebildeten Aufnahmekanal eingeführt werden kann. Durch ein Verdrehen eines Schalthebels des Adapters lassen sich elektrische Kontakte zu den Leitern herstellen; außerdem lässt sich der Adapter hierdurch an der Stromentnahmeschiene fixieren.

Aus der DE 82 11 526 U1 ist ein weiterer Adapter für eine Stromschiene bekannt; dieser weist eine Schaltwalze zum wahlweisen Anlegen von Kontakten an unterschiedliche Stromleiter in der Stromschiene auf.

Es ist daher Aufgabe der vorliegenden Erfindung, eine Technik bereitzustellen, die innerhalb von U-förmigen Tragschienen angeordneten Drähte eines Stromschienensystems auf eine einfache Weise und dabei besonders sicher zu kontaktieren, gleichzeitig allerdings auch eine sehr flexible Kontaktierung der verschiedenen Drähte zu ermöglichen.

Die Aufgabe wird durch ein Stromschienensystem, welches die Merkmale des Anspruches 1 aufweist, gelöst. Das an einem Leuchten-Modul vorgesehene erfindungsgemäße Kontaktierungselement weist dabei mehrere Anschlußkontakte auf, wobei das Kontaktierungselement von der offenen Seite her in die Tragschiene einzuführen und anschließend teilweise zu verdrehen ist. Durch das Verdrehen werden die Anschlußkontakte in die Nuten des Stromleitprofils eingeführt und mit den Drähten in Kontakt gebracht. Erfindungsgemäß ist dabei zumindest einer der Anschlußkontakte in verstellbar vorzugsweise höhenverstellbar. Im Gegensatz zu dem bekannten Adapter zur Kontaktierung der Drähte eines Stromschienensystems müssen hier somit nicht Kontaktierungsstifte jeweils ausgebaut und wieder eingesetzt werden, da ein einfaches Verschieben des Anschlußkontaktes ausreichend ist. Vorzugsweise wird das Kontaktierungselement zum Anschließen des Leuchten-Moduls um 45° verdreht. Erfindungsgemäß ist an der Unterseite des Kontaktierungselements eine Abdeckschiene zum Verschießen der Tragschiene angeordnet, wobei ein zum Verdrehen des Kontaktierungselements vorgesehener Drehknebel nach dem Kontaktieren der Drähte in einer Öffnung der Abdeckschiene versenkbar ist. Hierdurch lässt sich insbesondere ein Eindringen von Staub in die Tragschiene vermeiden.

Weiterbildungen der Erfindung sind Gegenstand der Unteransprüche.

Beispielsweise können an dem Kontaktierungselement Verriegelungselemente vorgesehen sein, welche bei dem Verdrehen und Kontaktieren der Drähte zusätzlich hervorstehende Teile der Tragschiene hintergreifen, wodurch gleichzeitig eine mechanische Befestigung an der Tragschiene ermöglicht wird. Auf diese Weise kann mit Hilfe eines einfachen Handgriffs sowohl eine elektrische Kontaktierung als auch eine mechanische Befestigung des Leuchten-Moduls durchgeführt werden. Ferner kann vorgesehen sein, daß der höhenverstellbare Anschlußkontakt in den den verschiedenen Drähten entsprechenden Positionen leicht einrasten kann, wodurch eine Positionierung des Kontakts für die gewünschte Kontaktierung erleichtert wird. Zur Erdung eines Leuchten-Moduls kann darüber hinaus ein Drahtelement vorgesehen sein, das zum einen in Kontakt mit der Leuchte bzw. dem Leuchten-Modul ist und zum anderen nach dem Verdrehen des Kontaktierungselements gegen den zur Erdung vorgesehenen Draht gepreßt wird.

Im folgenden soll die vorliegende Erfindung anhand der beiliegenden Zeichnung näher erläutert werden. Es zeigen:
Fig. 1 die Tragschiene eines Stromschienensystems mit einem eingesetzten erfindungsgemäßen Kontaktierungselement im Schnitt;
Fig. 2 die in Fig. 1 dargestellte Tragschiene ohne das Kontaktierungselement im Schnitt;
Fig. 3 ein Drahthalterungselement in perspektivischer Darstellung;
Fig. 4 das in Fig. 3 dargestellte Drahthalterungselement im Schnitt;
Fig. 5 den Übergangsbereich zwischen zwei zusammengesetzten Drahthalterungselementen von der Kontaktierungsseite her;
Fig. 6 den Übergangsbereich zwischen zwei Drahthalterungselementen von der Rückseite her;
Fig. 7 die Anordnung eines Verbindungselements und einer Verbindungsschiene zum Verbinden zweier Tragschienen;
Fig. 8 den Aufbau des Verbindungselements;
Fig. 9a einen in dem Verbindungselement verwendeten Metallverbinder;
Fig. 9b ein Federelement des in Fig. 9a dargestellten Metallverbinders; und
Fig. 10 das in Fig. 1 dargestellte Kontaktierungselement in perspektivischer Darstellung.

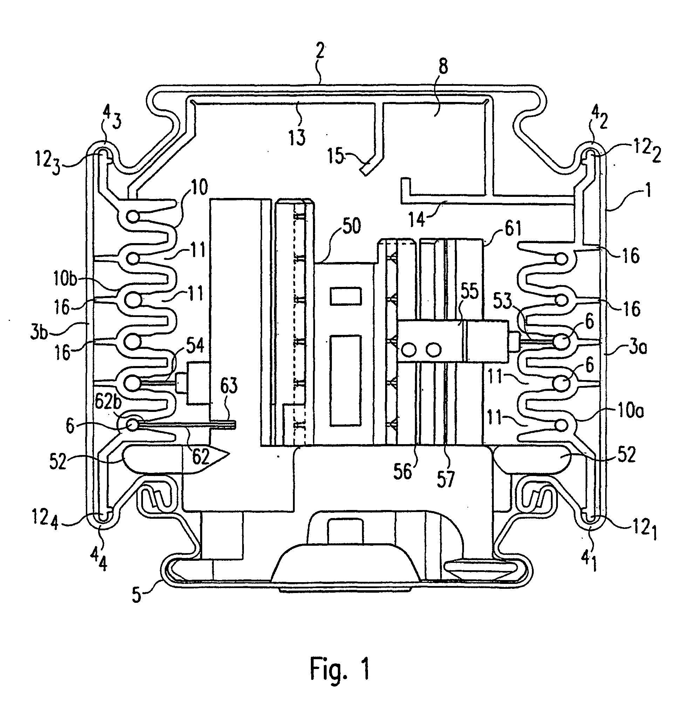

Basiselement des in Fig. 1 dargestellten Stromschienensystems ist eine aus Metall bzw. Blech bestehende U-förmige Tragschiene 1, welche mit ihrem Mittelschenkel 2 durch nicht dargestellte Befestigungsmittel an einem Träger, z.B. einer Raumdecke oder einer Raumwand befestigbar ist. Die Abdeckung der offenen unteren Seite der Tragschiene 1 erfolgt durch eine Abdeckschiene 5. Im dargestellten Fall ist diese Abdeckschiene 5 Bestandteil eines an der Tragschiene 1 befestigten Leuchten-Moduls, wobei in Fig. 1 lediglich das Kontaktierungselement des Leuchten-Moduls in Form eines Drehabgriffs 50 dargestellt ist, nicht allerdings dessen weiteren Bestandteile, beispielsweise die Lampe oder das dazugehörige Steuer- bzw. Betriebsgerät, bei dem es sich um ein elektronisches Vorschaltgerät (EVG) handeln kann. Der Innenraum der Tragschiene 1 dient in diesem Fall dann auch als Aufnahmeraum für die Betriebsgeräte der Lampen. Diejenigen Bereiche der Tragschiene 1, an denen keine Leuchten-Module angeordnet sind, können aus optischen und Sicherheitsgründen ebenfalls mit einer Abdeckschiene 5 verschlossen werden, wobei das Befestigen der Abdeckschiene 5 mittels Verklemmen oder Verrasten erfolgt.

Im vorliegenden Beispiel sind an den Innenseiten der beiden Seitenwände 3a und 3b der Tragschiene 1 Stromleitprofile angeordnet, welche durch mehrere aus Kunststoff bestehende und zusammengesetzte Drahthalterungselemente 10 gebildet werden, die jeweils zwei Seitenflügel 10a und 10b mit mehreren Nuten 11 zur Aufnahme der Drähte 6 enthalten. Dabei sind in dem rechten Seitenflügel 10a fünf Drähte 6 angeordnet, während auf der linken Seite sechs Drähte 6 verlaufen.

Die in dem rechten Seitenflügel 10a angeordneten Drähte 6 können in der Reihenfolge von oben nach unten beispielsweise folgende Funktion haben.
Notstrom 1
Notstrom 2
Neutralleiter vom Standardnetz
D1 = Steuerleitung für Lichtsteuerung
D2 = Steuerleitung für Lichtsteuerung.

Die Funktionen der in dem linken Seitenflügel 10b angeordneten Drähte 6 sind beispielsweise:
Phase von Notstrom 1
Phase von Notstrom 2
Standardphase 3
Standardphase 2
Standardphase 1
Erde.

Sowohl die Anzahl der verwendeten Drähte sowie deren Anordnung und Funktion ist lediglich beispielhaft dargestellt und kann den individuellen Bedürfnissen angepaßt werden.

Durch eine Kontaktierung der entsprechenden Drähte 6 kann der angeschlossenen Leuchte eine gewünschte Funktion zugewiesen werden, beispielsweise kann die Leuchte als Notlichtleuchte verwendet werden. Durch das Verwenden der beiden Steuerleitungen für die Lichtsteuerung besteht die Möglichkeit, mit diesen beiden Leitungen ein Bussystem zu bilden, über das eine Vielzahl von Leuchten mit Hilfe von digitalen Steuerbefehlen angesteuert werden kann, wie dies von komplexeren Beleuchtungssystemen her bekannt ist.

Die Kontaktierung der Drähte 6 erfolgt über mehrere an dem Drehabgriff 50 angeordnete Anschlußkontakte 53 und 54, welche in die entsprechenden Nuten 11 eingreifen und gegen die Drähte 6 zur Anlage kommen. Um eine variable und einfache Kontaktierung zu ermöglichen, ist beispielsweise der Anschlußkontakt 53 mittels einem Trägerelement 55 höhenverstellbar an dem Kontaktierungselement 50 angeordnet. Durch einfaches Verschieben des Trägerelementes 55 kann somit der an das Stromschienensystem angeschlossene Leuchte die gewünschte Funktion zugewiesen werden. Für die Erdung ist ferner ein in einem Schlitz 63 des Kontaktierungselements 50 geführtes Drahtelement 62 vorgesehen, dessen Ende 62b den zur Erdung vorgesehenen linken unteren Draht 6 kontaktiert. Die Netzeinspeisung für das Stromschienensystem kann zum Beispiel durch einen entsprechend adaptierten Drehabgriff erfolgen, der in Längsrichtung an beliebiger Stelle positioniert wird. Der genauere Aufbau und die Funktionsweise des erfindungsgemäßen Kontaktierungselements 50 werden zu einem späteren Zeitpunkt noch ausführlicher erläutert. Zunächst soll jedoch anhand der Fig. 1 bis 9b der Aufbau des Stromschienensystems beschrieben werden.

Eine sichere Halterung der beiden Seitenflügel 10a, 10b des Drahthalterungselements 10 erfolgt durch mehrere Führungsarme 12₁ - 12₄, welche in entsprechende Führungsnuten 4₁ - 4₄ der U-förmigen Tragschiene 1 eingreifen. Die zu einem Stromleitprofil aneinandergereihten mehreren Drahthalterungselemente 10 werden bei der Montage in Längsrichtung in die Tragschiene 2 eingeschoben. An der Rückseite der Seitenflügel 10a und 10b, d.h. an der der Kontaktierungsseite gegenüberliegenden Seite der Nuten 11 befinden sich mehrere Stützstreben 16, welche für eine stabile Lagerung der Nuten 11 innerhalb der Tragschiene 2 sorgen, so daß diese beim Kontaktieren nicht zurückgedrängt werden. Auf diese Weise wird eine zuverlässige Kontaktierung der Drähte 6 unterstützt.

Die Verbindung der beiden Seitenflügel 10a und 10b erfolgt in regelmäßigen Abständen über Verbindungsstege 13, welche an dem Mittelschenkel 2 der Tragschiene 1 angeordnet sind. Die Verbindungsstege 13 weisen ferner nach unten abstehende Halteschenkel 15 auf, die gemeinsam mit einem von dem rechten Seitenflügel 10a horizontal abstehenden Horizontalschenkel 14 einen zusätzlichen Hohlraum 8 bilden. Dieser Hohlraum kann für die Lagerung zusätzlicher Kabel oder Leitungen verwendet werden. Darüber hinaus hat der Horizontalschenkel 14 noch die Aufgabe, zu verhindern, daß das Kontaktierungselement 50 seitenverkehrt in die Tragschiene 1 eingeführt wird, wie ebenfalls später noch erläutert wird.

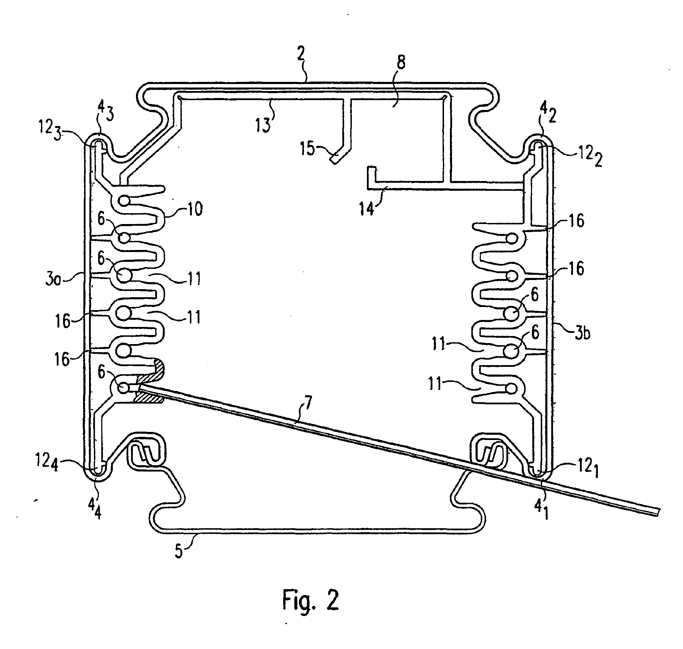

Die Form der Nuten 11 der Drahthalterungselemente 10 ist derart gewählt, daß ein Berührungsschutz gewährleistet ist, wie im folgenden anhand von Fig. 2 erläutert werden soll. Hier ist wiederum die Tragschiene 1 mit einem darin angeordneten Stromleitprofil dargestellt, allerdings nunmehr ohne den Drehabgriff 50. Die eingangs erwähnte Sicherheitsnorm sieht vor, daß die in dem Stromleitprofil angeordneten Drähte 6 nicht derart frei liegen dürfen, daß ein 1mm-dicker Prüfdraht 7 in Geradeaus-Dehnung auf einen stromführenden Draht 6 treffen kann. In der Darstellung ist dabei für den links unten angeordneten Draht 6 der Eintrittswinkel für den Prüfdraht 7 am günstigsten. Wie Fig. 2 zu entnehmen ist, sind die Breiten, Tiefen und Öffnungsformen der Nuten 11 derart bemessen, daß selbst bei dem kleinsten Eintrittswinkel der Prüfdraht 7 keinen der Drähte 6 kontaktieren kann. Auf diese Weise wird ein unbeabsichtigtes Berühren der Drähte 6 vermieden und die entsprechende Sicherheitsnorm erfüllt.

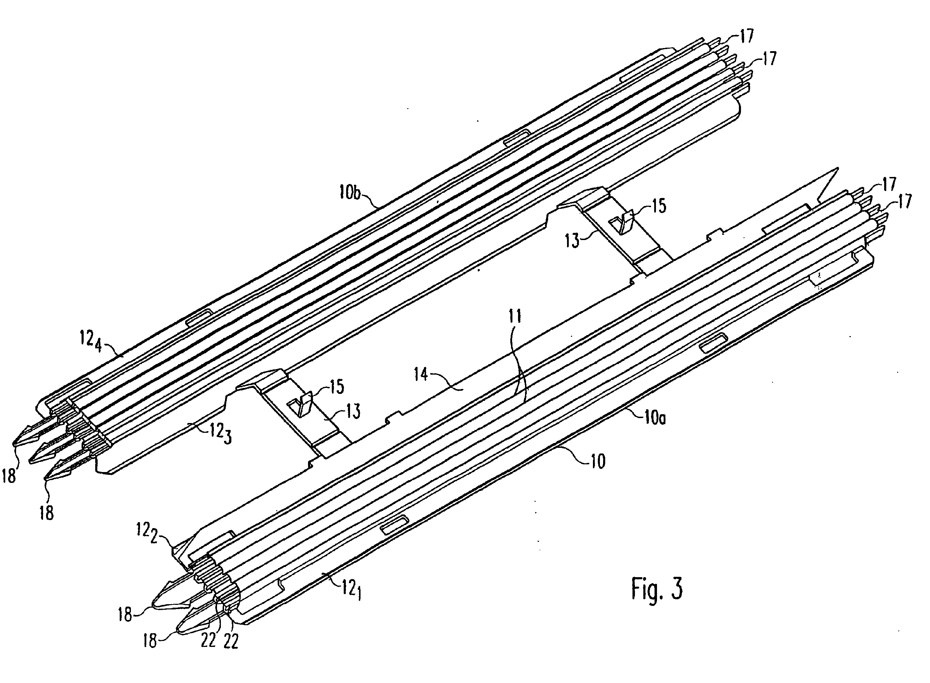

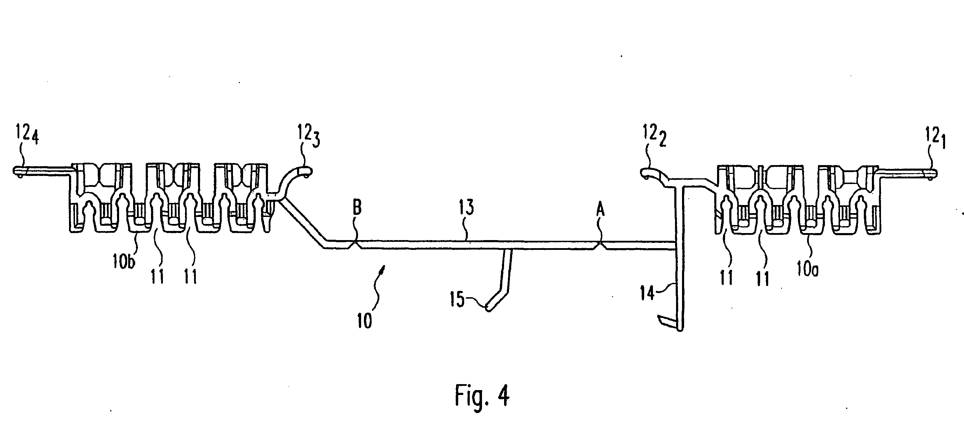

Anhand der Fig. 3 bis 6 soll nunmehr die konkrete Ausgestaltung der Drahthalterungselemente 10 erläutert werden, wobei Fig. 3 ein Drahthalterungselement 10 in perspektivischer Darstellung zeigt. Wesentliche Elemente des Drahthalterungselements 10 sind dabei die beiden Seitenflügel 10a und 10b, welche die Nuten 11 zur Lagerung der Drähte aufweisen. Sie sind über zwei Verbindungsstege 13 miteinander verbunden. Auf diese Weise kann zusätzlich mit Hilfe des Horizontalschenkels 14 und den von den Verbindungsstegen 13 abstehenden Halteschenkeln 15 der zuvor erwähnte Hohlraum 8 gebildet werden, der zur Lagerung weiterer für das Beleuchtungssystem nützlicher Leitungen oder Kabel benutzt werden kann. An den beiden Seitenflügeln 10a, 10b befinden sich ferner auch die Führungsarme 12₁ bis 12₄, welche in die Ausnehmungen 4₁ bis 4₄ der Tragschiene 1 beim Einsetzen eingreifen. Die Darstellungen in Fig. 3 und Fig. 4 zeigen dabei das Drahthalterungselement 10 unmittelbar nach der Herstellung. Um das Drahthalterungselement 10 in die Tragschiene 1 einzuführen, werden die Seitenflügel 10a und 10b um die beiden Faltstellen A und B um 90° nach unten geklappt (siehe Fig. 4) und anschließend in die Tragschiene 1 eingeschoben, wodurch sich die in den Fig. 1 und 2 dargestellte Anordnung ergibt.

An ihren Enden weisen die beiden Seitenflügel 10a und 10b Vorsprünge 17 bzw. 22 auf, mit deren Hilfe zwei zusammengefügte Drahthalterungselemente 10 überlappend ineinandergreifen. An einem der beiden Enden sind ferner Verriegelungsköpfe 18 vorgesehen, welche ein Entfernen zweier zusammengefügter Drahthalterungselemente 10 in Längsrichtung nur bis zu einer gewissen Maximalentfernung zulassen, so daß ein aus mehreren Drahthalterungselementen 10 zusammengesetztes Stromleitprofil in seiner Länge flexibel ist und damit Längenveränderungen der einzelnen aus Kunststoff bestehenden Drahthalterungselemente 10 aufgrund von Temperatunterschieden kompensiert werden können.

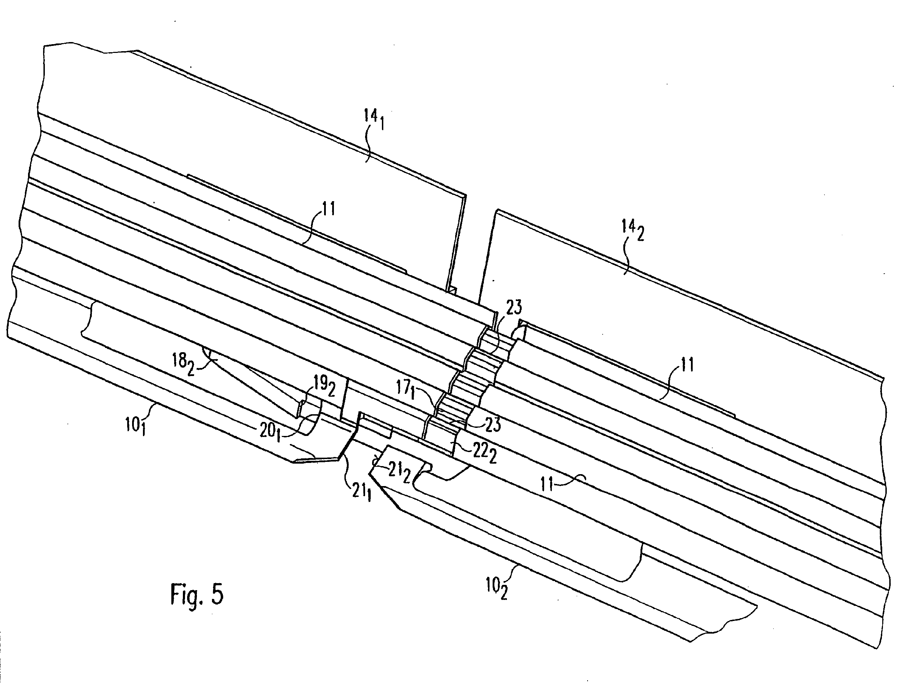

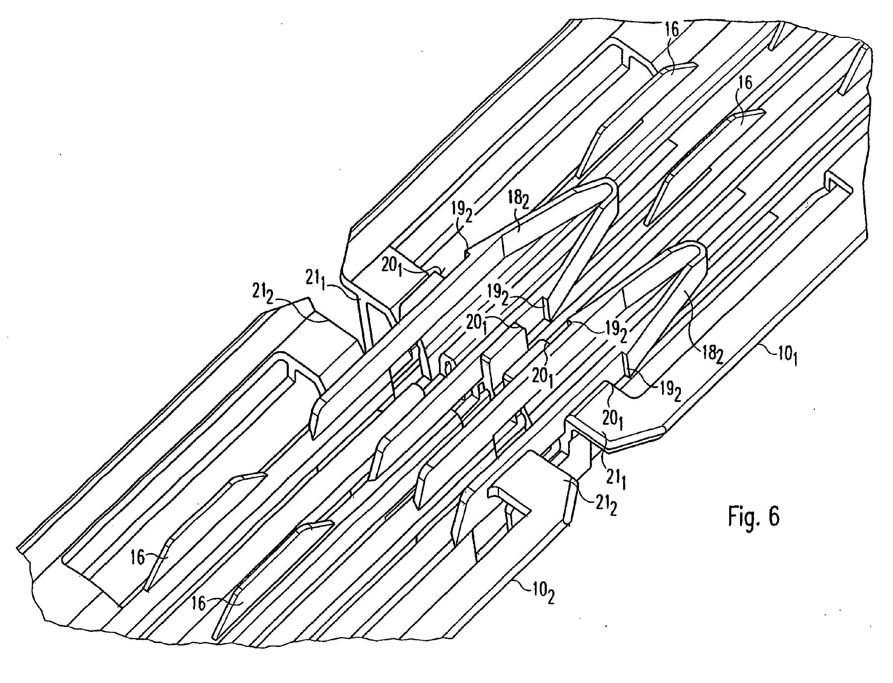

Dies soll anhand der Fig. 5 und 6 verdeutlicht werden, welche zwei zusammengesetzte Drahthalterungselemente in vergrößerter Darstellung zeigen, zum einen von der Kontaktierungsseite her (Fig. 5) und zum anderen von der gegenüberliegenden Rückseite (Fig. 6) her. Die zu dem ersten Drahthalterungselement 10₁ gehörenden Teile sind dabei mit dem Index 1 versehen, während die zu dem zweiten Drahthalterungselement 10₂ gehörenden Elemente den Index 2 aufweisen. Nach dem Zusammenfügen der beiden Drahthalterungselemente 10₁ und 10₂ greifen diese beiden derart überlappend ineinander, daß jeweils durch einen Vorsprung 17₁ des ersten Drahthalterungselements 10₁ sowie durch einen Vorsprung 22₂ des zweiten Drahthalterungselements 10₂ ein Kanal 23 gebildet wird, der die Nuten 11 der beiden Drahthalterungselemente 10₁ und 10₂ miteinander verbindet. Wie auch die Nuten 11 sind sämtliche auf diese Weise gebildeten Kanäle 23 in dem Verbindungsbereich lediglich von der Kontaktierungsseite, also von oben her zugänglich, nicht allerdings von der Seite. Dadurch wird auch in dem Bereich der Kanäle 23 der geforderte Berührungsschutz gewährleistet.

Der Darstellung in Fig. 6 ist zu entnehmen, daß die beiden Verriegelungsköpfe 18₂ ein Entfernen der beiden Drahthalterungselemente 10₁ und 10₂ nur bis zu einer Maximalentfernung zulassen, die dadurch vorgegeben ist, daß die an den Enden der Verriegelungsköpfe 18 seitlich vorstehenden Verriegelungsvorsprünge 19₂ gegen Stoppwände 20₁ zur Anlage kommen. Dabei ist diese vorgegebene maximale Entfernung sowie die Länge der ineinandergreifenden Vorsprünge 17 und 22 derart bemessen, daß selbst bei der Maximalentfernung der beiden Drahthalterungselemente 10₁ und 10₂ voneinander noch die zuvor erläuterten Kanäle 23 gebildet werden und der Berührungsschutz gewährleistet ist. Auf der anderen Seite können sich die Enden der beiden Drahthalterungselemente 10₁, 10₂ soweit aneinander annähern, bis ihre beiden Stirnseiten 21₁ und 21₂ gegeneinander in Anlage kommen. Dies bedeutet, daß beide Drahthalterungselemente 10₁, 10₂ mit einem gewissen Spiel gegeneinander verschiebbar sind, wobei jedoch zu jedem Zeitpunkt der Berührungsschutz erzielt wird. Auf diese Weise können Veränderungen der Länge eines einzelnen Drahthalterungselements 10, welches sich beispielsweise aufgrund von erhöhter Temperatur ausdehnt oder bei niedrigeren Temperaturen zusammenzieht, kompensiert werden. Dies ist insbesondere deswegen wichtig, da im Gegensatz zu den aus Kunststoff bestehenden Drahthalterungselementen 10 die darin gelagerten Drähte 6 selbst keine derartig großen Längenveränderungen vollführen können, da der Temperaturkoeffizient von Metall nur 1/10 des Ausdehnungskoeffizients von Kunststoff beträgt. Bei einer Länge von ca. 500mm für ein einzelnes Drahthalterungselement 10 kann somit ein zulässige Spiel, mit dem sich die aneinandergrenzenden Drahthalterungselemente 10 gegeneinander verschieben können, ca. 8mm betragen.

Die dargestellten Drahthalterungselemente 10 können aus Kunststoff in einfacher Weise im Spritzgußverfahren erzeugt werden, wodurch sie sehr kostengünstig herzustellen sind. Ferner ist es ausreichend, Drahthalterungselemente 10 in lediglich einer einzigen Länge herzustellen, da zur Anpassung des gebildeten Stromleitprofils an die unterschiedlichen Längen der Drahtschienen lediglich die Anzahl der verwendeten Drahthalterungselemente 10 angepaßt werden muß, was wiederum den Herstellungsaufwand des gesamten Systems deutlich reduziert. Die ineinandergreifenden Vorsprünge sowie die Verriegelungselemente können dabei auch anders ausgestaltet sein.

Bei Verwendung der soeben vorgestellten Drahthalterungselemente wäre es denkbar, zunächst sämtliche Tragschienen eines Stromschienensystems zu montieren und diese erst anschließend mit den erforderlichen Stromleitprofilen zu bestücken, wobei dann eine Kontaktierung über die gesamte Länge des Stromschienensystems hin möglich ist. Üblicherweise werden jedoch bereits die fertig bestückten Tragschienen vertrieben, in denen sich bereits ein vollständiges Stromleitprofil mit den darin angeordneten Drähten befindet. Im folgenden soll daher eine Möglichkeit erläutert werden, auch in den Verbindungsbereichen zwischen zwei Tragschienen eine durchgängige Kontaktierung zu realisieren. Diese durchgängige Kontaktierung wird dadurch erreicht, daß hierfür ein Verbindungselement verwendet wird, welches den Nuten der Stromleitprofile entsprechende und zusätzlich von den beiden Stirnseiten des Verbindungselements her zugängliche rillenförmige Ausnehmungen aufweist.

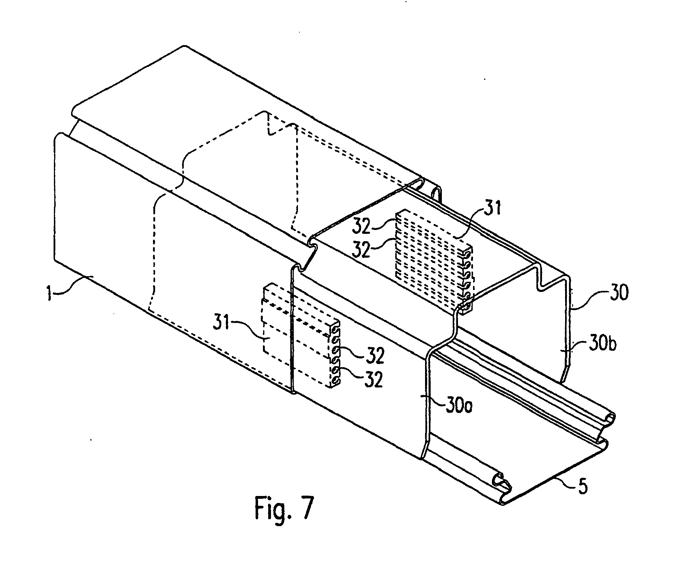

Dies ist zunächst schematisch in Fig. 7 dargestellt. Zur mechanischen Verbindung zweier aneinandergrenzender Tragschienen 1 wird eine ebenfalls U-förmige kurze Verbindungsschiene 30 verwendet, auf welche von beiden Seiten her die miteinander zu verbindenden Tragschienen 1 aufgeschoben werden. Eine nicht dargestellte Weiterbildung gewährleistet, daß zwei durch eine Verbindungsschiene 30 miteinander verbundene Tragschienen 1 lösbar zusammengehalten werden. Hierzu kann jede Tragschiene 1 in ihrem oberen Bereich eine oder mehrere Öffnungen aufweisen. Die Verbindungsschiene 30 ist dann ebenfalls mit entsprechenden Öffnungen versehen, durch die Federzungen ragen. Die Federzungen hintergreifen die Öffnungen der Tragschiene 1, sobald die Verbindungsschiene 30 in der Tragschiene 1 die entsprechende Position erreicht hat. Um die Tragschiene 1 und die Verbindungsschiene 30 wieder lösen zu können, muß lediglich Druck auf die Federzungen ausgeübt werden. Eine solche lösbare Verbindung liegt vorzugsweise an beiden Seiten vor, was bedeutet, daß die Verbindungsschiene 30 nächst ihren beiden Enden derartige Öffnungen mit den entsprechenden Federzungen aufweist. Alternativ zu einer beidseitig lösbaren Verbindung ist allerdings auch eine Ausgestaltung möglich, die lediglich auf einer Seite die soeben beschriebene Verbindung mittels Federzungen aufweist, während an der anderen Seite der Verbindungsschiene 30 eine übliche Schraubverbindung vorgesehen ist.

Eine besonders vorteilhafte Variante dieser Weiterbildung liegt darin, daß die an jeweils einem Ende der Verbindungsschiene 30 angeordneten Federzungen zu einem gemeinsamen Schienen-Verriegelungselement gehören, das an dem Mittelschenkel der Verbindungsschiene 30 angeordnet ist, wobei die Federzungen im oberen Bereich der Seitenwände seitlich durch Öffnungen ragen. Dabei ist das Schienen-Verriegelungselement so ausgebildet, daß die Federzungen unter Einwirkung einer Kraft von oben auf das Element in das Innere des Verbindungsschiene 30 eingezogen werden. Über eine in dem Mittelschenkel der Tragschienen 1 vorgesehene zusätzliche Öffnung ist das Schienen-Verriegelungselement von oben auf einfache Weise zu erreichen und beispielsweise mittels eines Schraubenziehers zu betätigen, so daß die Verbindung durch einen einfachen Handgriff wieder lösbar.

Die in Fig. 7 aus Gründen der Übersichtlichkeit nicht dargestellten Drahthalterungselemente 10 sind in dem Verbindungsbereich geringfügig anders ausgestaltet, um der zusätzlich in der Tragschiene 1 angeordneten Verbindungsschiene 30 Rechnung zu tragen. Beispielsweise weisen die Drahthalterungselemente 10 in diesem Bereich keine Stützstreben 16 auf. Zur Verbindung der Stromleitprofile sind an den Seitenschenkeln 30a und 30b der Verbindungsschiene 30 zwei Verbindungselemente 31 vorgesehen, welche die zuvor erwähnten Ausnehmungen 32 aufweisen. Innerhalb dieser Ausnehmungen 32 sind Metallverbinder angeordnet, die von beiden Seiten her mit den miteinander zu verbindenden Drähten verbunden werden. Dabei ist die Öffnungsform der Ausnehmungen 32 derart gewählt, daß auch diese das Sicherheitskriterium eines Berührungsschutzes erfüllen. Für eine Verbindung mit den Verbindungselementen 31 sind die den Verbindungselementen 31 benachbarten Drahthalterungselemente auch an ihren Enden modifiziert.

Im dargestellten Beispiel sind an beiden Seiten der Verbindungsschiene 30 identische Verbindungselemente 31 mit jeweils sechs Ausnehmungen 32 angeordnet. Dies bedeutet, daß die oberste Ausnehmung 32 des auf der rechten Seite angeordneten Verbindungselements 32 frei bleibt, da der entsprechende Seitenflügel 10a lediglich fünf Nuten 11 zur Halterung von fünf Drähten 6 aufweist. Selbstverständlich können jedoch auch der genauen Struktur der Drahthalterungselemente entsprechende Verbindungselemente verwendet werden.

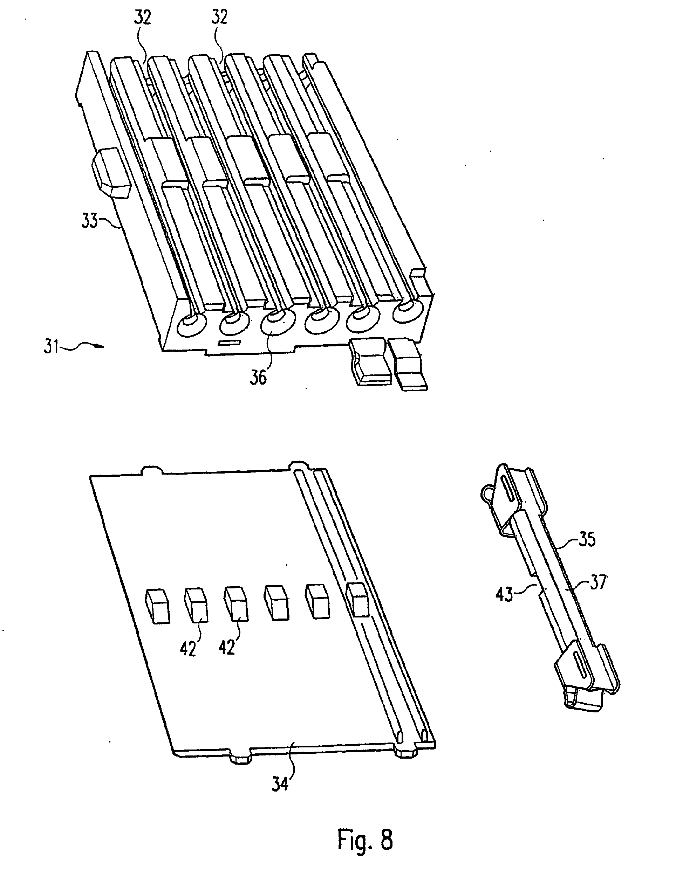

Die genauere Form eines Verbindungselements 31 ist in Fig. 8 dargestellt. Es besteht aus einem kastenförmigen und an der Unterseite offenen Basisteil 33, in das von der Unterseite her Metallverbinder 35 eingesetzt werden. Die Ausnehmungen 32 des Basisteils 33 sind von den beiden Stirnseiten her über trichterförmige Öffnungen 36 zugänglich, wobei beim Einführen eines Drahtes in eine trichterförmige Öffnung 36 dieser in Verbindung mit dem Metallverbinder 35 gebracht wird. Nach dem Einsetzen der Metallverbinder 35 wird das Basisteil 33 durch eine Abdeckplatte 34 von der Unterseite her verschlossen. Eine Kontaktierung durch ein Leuchten-Modul in dem Bereich des Verbindungselements 31 erfolgt dann dadurch, daß die Anschlußkontakte des Kontaktierungselements gegen die Oberseite einer Kontaktierungsplatte 37 der Metallverbinder 35 gepreßt werden. Am Ende der Metallverbinder 35 wird diese Aufgabe wieder durch die Drähte übernommen, so daß keine Lücke entsteht, in der eine Kontaktierung nicht möglich ist.

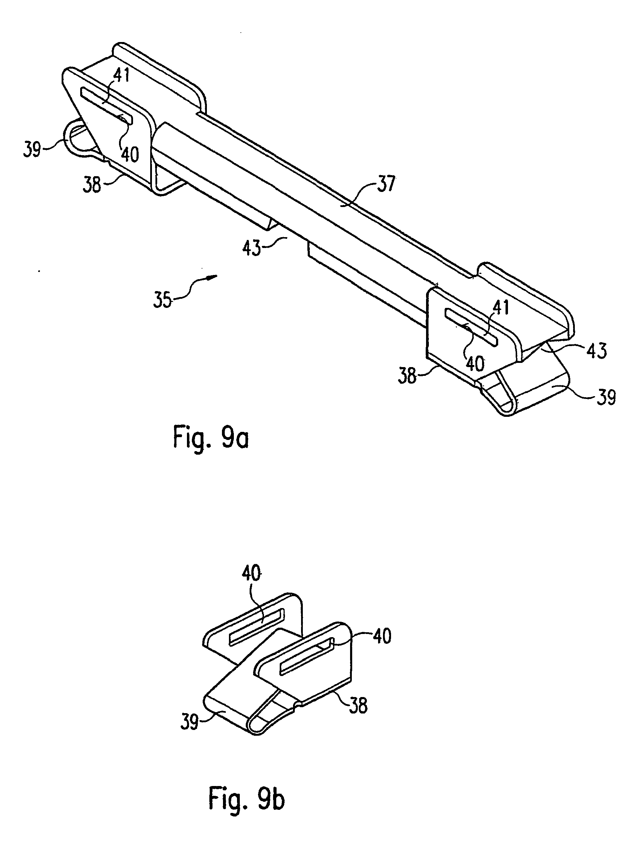

Die nähere Ausgestaltung eines Metallverbinders 35 ist in den Fig. 9a und 9b gezeigt. Er besteht aus einer länglichen und an ihren Längsseiten ein wenig nach unten gebogenen Kontaktierungsplatte 37, deren Aufgabe es ist, den elektrischen Strom von den Drähten zu übernehmen und weiterzuleiten. An den Enden der Kontaktierungsplatte 37 ist jeweils ein vorzugsweise aus einer Chrom-Nickel-Legierung bestehendes U-förmiges Federelement 38, welches einzeln in Fig. 9b dargestellt ist, angeordnet. Das Federelement 38 weist eine nach innen gebogene Federzunge 39 auf, durch welche ein in den Metallverbinder 35 eingeführter Draht verklemmt und ausreichend fest in Hinblick auf die elektrischen Übergangswiderstände gegen die Kontaktierungsplatte 37 gedrückt wird. Auf diese Weise wird ferner vermieden, daß sich die Drähte bei einer sich verändernden Wärmeausdehnung des Stromleitprofils pumpenartig verschieben bzw. auswandern können. Die von den Drähten abgewandte Seite der aus verzinntem Kupfer bestehenden Kontaktierungsplatte 37 bildet die Kontaktierungsfläche für die Kontakte des Kontaktierungselements. Zur Verbesserung des Kontakts zwischen der Kontaktierungsplatte 37 und den Drähten besitzt die Kontaktierungsplatte 37 an ihrer Unterseite eine leicht bogenförmige oder dreieckige Vertiefung 43.

Die Befestigung der Federelemente 38 an den Enden der Kontaktierungsplatte 37 erfolgt durch an den Seitenwänden der Federelemente 38 befindliche Ausnehmungen 40, in die Vorsprünge 41 der Kontaktierungsplatte 37 eingreifen. Eine stabile Anordnung der Metallverbinder 35 in dem Verbindungselement 31 wird ferner dadurch unterstützt, daß an der Abdeckplatte 34 aus Kunststoff bestehende Zapfen 42 angeordnet sind, welche nach dem Aufsetzen der Abdeckplatte 34 von der Unterseite her gegen die Kontaktierungsplatten 37 der Metallverbinder 35 drücken. Da die Zapfen 42 ferner in seitliche Ausnehmungen 43 der nach unten gebogenen Längsseiten der Kontaktierungsplatten 37 eingreifen, wird gleichzeitig auch ein seitliches Verschieben der Metallverbinder 35 unterbunden. Darüber hinaus stellen die Zapfen 42 auch eine Sperre dar, durch die das Auswandern der Drähte begrenzt wird. Das hier dargestellte Verbindungselement schließt die Lücke zwischen den Drahthalterungselementen der Stromleitprofile, so daß ermöglicht wird, bereits fertig bestückte Stromschienen 1, mit durchgängig kontaktierbaren Stromleitprofilen zusammenzufügen, wobei auch in den Verbindungsbereichen kontaktiert werden kann.

Dabei ist die Anwendung dieses Verbindungselements nicht auf das dargestellte Beispiel mit dem erfindungsgemäßen Drahthalterungselementen beschränkt. Beispielsweise kann das in den Fig. 7 bis 9b dargestellte Verbindungselement auch bei dem eingangs erwähnten Lichtbandsystem, bei dem die Stromleitprofile im Extrusionsverfahren hergestellt werden und einstückig sind, für deren Verbindung Verwendung finden.

Alternativ zu der zuvor erwähnten Verwendung eines adaptierten Drehabgriffs für die Netzeinspeisung kann auch ein an die Stirnseite einer Tragschiene anschließbares und mit den Metallverbindern zusammenwirkendes Netz-Anschlußelement vorgesehen sein, durch welches die Drähte des Stromschienensystems mit den Netzleitungen verbunden werden.

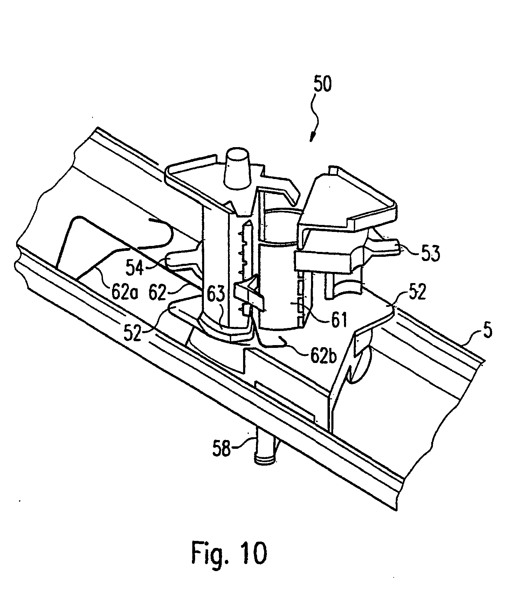

Abschließend soll anhand der Fig. 1 und 10 der genauere Aufbau und die Funktionsweise des als Kontaktierungselement 50 ausgestalteten Kontaktierungselements erläutert werden. Fig. 10 zeigt dabei den Kontaktierungselement 50 mit einer an seiner Unterseite angeordneten Abdeckschiene 5 in perspektivischer Darstellung. Wesentlicher Bestandteil des Kontaktierungselements 50 sind die an der Außenseite des zylinderförmigen Basiskörpers 61 angeordneten Kontakte 53 und 54, die zu einer wahlweisen Kontaktierung der verschiedenen Drähte 6 höhenverstellbar sind. Eine weitere, allerdings nicht frei wählbare sondern vorgegebene Kontaktierung zur Erdung ist durch das Drahtelement 62 gegeben. Dieses Drahtelement 62 ist in einem an dem Basiskörper 61 vorgesehenen Schlitz 63 geführt, wobei ein Ende 62a des Drahtelements 62 durch seine Formgebung in der Abdeckschiene 5 des Leuchten-Moduls klemmend fixiert ist. Das andere Ende 62b steht in der Höhe des Erdungsdrahtes seitlich hervor. Ferner besitzt der Kontaktierungselement 50 in seinem unteren Bereich zwei seitlich abstehende Verriegelungselemente 52.

Das Kontaktieren der Drähte 6 des Stromleitprofils erfolgt dadurch, daß das mit einem Beleuchtungsmodul verbundene Kontaktierungselement 50 in die untere Öffnung der Tragschiene 1 eingeführt wird. Wie Fig. 1 zu entnehmen ist, ist der zylinderförmigen Basiskörper 61 unterschiedlich hoch, wobei der lediglich auf der rechten Seite der Tragschiene 1 angeordnete Horizontalschenkel 14 verhindert, daß das Kontaktierungselement 50 seitenverkehrt in die Tragschiene 1 eingeführt wird.

Nach dem Einführen des Kontaktierungselementes 50 wird dieser um ca. 45° verdreht, wobei infolgedessen die seitlich angeordneten Verriegelungselemente 52 in nach innen vorstehende Teile der Tragschiene 1 bzw. des Stromleitprofils eingreifen und somit für eine mechanische Befestigung des Leuchten-Moduls sorgen. Gleichzeitig werden die Anschlußkontakte 53 und 54 in die Nuten 11 der Drahthalterungselemente 10 hineingedreht, so daß der erwünschte elektrische Kontakt zustande kommt. Wie zuvor erwähnt, können einige oder alle Kontakte höhenverstellbar sein, was im dargestellten Beispiel dadurch erfolgt, daß das Trägerelement 55 des Kontakts 53 innerhalb von Führungsschienen 56 und 57 vertikal verschiebbar ist. Dabei sind das Trägerelement 55 sowie der zylinderförmige Basiskörper 61 mit den Führungsschienen 56 und 57 so ausgestaltet, daß das Trägerelement 55 in den den Drähten 6 entsprechenden Positionen leicht einrasten kann, wodurch eine genaue Positionierung des Kontakts 53 erleichtert wird.

Der Schlitz 63 bildet für das Drahtelement 62 einen exenterförmigen Anschlag und bewirkt, daß das Ende 62b des Drahtelements 62 während dem Verdrehen des Drehabgriffs 50 auf den zur Erdung vorgesehenen linken unteren Draht 6 gepreßt wird. Auf diese Weise wird eine Erdung zwischen der metallischen Abdeckschiene 5, die Bestandteil des Leuchten-Moduls ist, und der metallischen Tragschiene 1 hergestellt. Hierfür ist es notwendig, daß das Drahtelement 62 eine gewisse Festigkeit aufweist, weshalb es vorzugsweise aus einem verzinkten Stahldraht oder einem CrNi-Draht besteht.

Die an der Unterseite des Drehabgriffs angeordnete Abdeckschiene 5 verschließt die Tragschiene 1 nach unten, wodurch gleichzeitig auch das Eindringen von Staub vermieden wird. Im Bereich des Kontaktierungselements 50 weist die Abdeckschiene 5 einen länglichen Schlitz auf, in welchen der Drehknebel 58 in der Verriegelungsstellung nach oben eingeführt werden kann, so daß er unten mit der Abdeckschiene 5 bündig ist. Auf diese Weise wird eine vollständige Abschließung der Tragschiene 1 erzielt.

Die Abdeckschiene 5 wird auch an Stellen verwendet, an denen keine Leuchten-Module angeordnet sind. Im Falle der Befestigung eines Leuchten-Moduls ist die Abdeckschiene 5 allerdings gleichzeitig auch die Halterung für sämtliche Elemente des Leuchten-Moduls, wobei z.B. das bzw. die Vorschaltgeräte oben auf der Abdeckschiene 5 angeordnet sind und somit in den Innenraum der U-förmigen Tragschiene hineinragen. Das vorgestellte Kontaktierungselement 50 ermöglicht auf eine einfache Weise eine Kontaktierung der Drähte sowie eine mechanische Befestigung des Leuchten-Moduls in dem Stromschienensystem. Insbesondere bei der vorgestellten Lösung, bei der über die gesamte Länge des Stromschienensystems hinweg eine freie Kontaktierung ermöglicht wird, ist eine Anwendung des dargestellten Kontaktierungselementes 50 vorteilhaft, da dieser besonders flexibel einsetzbar ist und wieder entfernt werden kann.

Die vorliegende Erfindung gibt somit ein sehr leistungsfähiges Stromschienensystem an, welches erstmalig die Möglichkeit einer vollkommen freien Kontaktierung und Anordnung der Leuchten-Module bietet. Dies hat zur Folge, daß auch die einzelnen Leuchten-Module nicht mehr an bestimmte Längen angepaßt werden müssen, um eine geeignete Anordnung innerhalb des Stromschienensystems zu ermöglichen. Durch den erfindungsgemäßen Drehabgriff kann ein schnelles und flexibles Kontaktieren der relativ schwer zugänglichen Drähte innerhalb einer U-förmigen Tragschiene erreicht werden.

## Patentansprüche

1. Stromschienensystem für Leuchten mit
mehreren modular miteinander verbindbaren U-förmigen Tragschienen (1) sowie einem an mindestens einer der beiden Innenseiten der Seitenwände (3a, 3b) der Tragschienen (1) angeordneten Stromleitprofil, das von einer Kontaktierungsseite her zugängliche und aneinander angrenzend angeordnete Nuten (11) zur Aufnahme von Drähten (6) für die Stromversorgung und/oder Übertragung von digitalen Steuerbefehlen aufweist,
wobei
a) eine an das Stromschienensystem anzuschließende Leuchte ein Kontaktierungselement (50) aufweist, das in die Öffnung einer Tragschiene (1) einführbar und teilweise verdrehbar ist, um durch das Verdrehen Anschlusskontakte (53, 54) des Kontaktierungselements (50) in die Nuten (11) des Stromleitprofils zum Kontaktieren der Drähte (6) einzuführen, und
b) mindestens einer der Anschlusskontakte (53) für eine wahlweise Kontaktierung
der Drähte (6) verstellbar ist,
**dadurch gekennzeichnet,**
**dass** an der Unterseite des Kontaktierungselements (50) eine Abdeckschiene (5) zum Verschließen der Tragschiene (1) angeordnet ist, wobei ein zum Verdrehen des Kontaktierungselements (50) vorgesehener Drehknebel (58) nach dem Kontaktieren der Drähte (6) in einer Öffnung der Abdeckschiene (5) versenkbar ist.

2. Stromschienensystem nach Anspruch 1,
bei dem der mindestens eine Anschlusskontakt (53) mittels eines Trägerelements (55) höhenverstellbar an dem Kontaktierungselement (50) angeordnet ist.

3. Stromschienensystem nach Anspruch 2,
wobei das Trägerelement (55) innerhalb von Führungsschienen (56, 57) vertikal verschiebbar ist.

4. Stromschienensystem nach einem der vorhergehenden Ansprüche,
bei dem das Kontaktierungselement (50) in seinem unteren Bereich zwei seitlich abstehende Verriegelungselemente (52) aufweist.

5. Stromschienensystem nach einem der vorhergehenden Ansprüche,
bei dem die Abdeckschiene (5) im Bereich des Kontaktierungselements (50) einen länglichen Schlitz aufweist, in welchen der Drehknebel (58) in einer Verriegelungsstellung nach oben eingeführt werden kann, so dass er unten mit der Abdeckschiene (5) bündig ist.

6. Stromschienensystem nach einem der vorhergehenden Ansprüche,
weiterhin aufweisend
ein Drahtelement (62) für die Erdung, wobei das Drahtelement (62) in einem Schlitz (63) des Kontaktierungselements (50) geführt ist.

7. Stromschienensystem nach Anspruch 6,
bei dem ein Ende (62a) des Drahtelements (62) durch seine Formgebung in der Abdeckschiene (5) klemmend fixiert ist.

8. Stromschienensystem nach Anspruch 7,
bei dem das andere Ende (62b) des Drahtelements (62) in der Höhe des Erdungsdrahtes seitlich hervorsteht.

9. Stromschienensystem nach einem der vorhergehenden Ansprüche,
bei dem die Abdeckschiene (5) und die Tragschienen (1) metallisch sind.

## Claims

1. A conductor rail system for luminaires having a plurality of U-shaped mounting rails (1), which can be connected together in a modular fashion, and also an electroconductor profile that is arranged on at least one of the two insides of the side walls (3a, 3b) of the mounting rails (1) and has grooves (11) that are accessible from a contact side and are arranged adjacently to each other to receive wires (6) for the power supply and/or transmission of digital control commands,
wherein
a) a luminaire that is to be connected to the conductor rail system has a contact element (50) which can be introduced into the opening of a mounting rail (1) and is in part rotatable in order, by means of the rotation, to introduce connecting contacts (53, 54) of the contact element (50) into the grooves (11) of the electroconductor profile for the purpose of contacting the wires (6), and
b) at least one of the connecting contacts (53) is
adjustable for selective contacting of the wires (6), **characterised in that**
arranged on the underside of the contact element (50) there is a covering rail (5) for closing the mounting rail (1), wherein a rotary toggle (58) that is provided to rotate the contact element (50) can be sunk in an opening of the covering rail (5) after the wires (6) have been contacted.

2. A conductor rail system according to claim 1,
in which the at least one connecting contact (53) is arranged on the contact element (50) so that it is vertically adjustable by means of a carrier element (55).

3. A conductor rail system according to claim 2,
wherein the carrier element (55) is vertically displaceable within guiding rails (56 and 57).

4. A conductor rail system according to one of the preceding claims,
in which the contact element (50) has in its lower area two laterally protruding locking elements (52).

5. A conductor rail system according to one of the preceding claims,
in which in the area of the contact element (50) the covering rail (5) has an elongate slot into which the rotary toggle (58) can be introduced upwards in a locking position so that it is flush at the bottom with the covering rail (5).

6. A conductor rail system according to one of the preceding claims,
having, furthermore,
a wire element (62) for earthing purposes, wherein the wire element (62) is guided in a slot (63) of the contact element (50).

7. A conductor rail system according to claim 6,
in which one end (62a) of the wire element (62) as a result of its shaping is fixed in a clamping manner in the covering rail (5).

8. A conductor rail system according to claim 7,
in which the other end (62b) of the wire element (62) projects laterally at the height of the earthing wire.

9. A conductor rail system according to one of the preceding claims,
in which the covering rail (5) and the mounting rails (1) are metallic.

## Revendications

1. Système de rail conducteur pour des systèmes d'éclairage, comprenant
plusieurs si supports (1) en forme de U pouvant être raccordés les uns aux autres de manière modulaire, ainsi
qu'un profilé conducteur de courant disposé sur au moins un des deux côtés intérieurs des parois latérales (3a, 3b) des profilés supports (1), ledit profilé conducteur de courant présente des rainures (11) accessibles depuis un côté de mise en contact et disposées de manière contigüe les unes aux autres, servant à recevoir des fils métalliques (6) pour l'alimentation en courant et/ou pour la transmission d'instructions de commande numériques,
sachant
a) qu'un système d'éclairage à connecter au système de rail conducteur présente un élément de mise en contact (50), ledit élément de mise en contact pouvant être introduit dans l'ouverture d'un profilé support (1) et être en partie câblé afin d'introduire par le câblage des contacts de connexion (53, 54) de l'élément de mise en contact (50) dans les rainures (11) du profilé conducteur de courant servant à établir un contact avec les fils métalliques (6), et
b) qu'au moins un des contacts de connexion (53) peut être déplacé pour établir au choix un contact avec les fils métalliques (6),
**caractérisé en ce**
**qu'**un rail de recouvrement (5) servant à fermer le profilé support (1) est disposé au niveau du côté inférieur de l'élément de mise en contact (50), sachant qu'une manette rotative (58) prévue pour câbler l'élément de mise en contact (50) peut être enfoncée, une fois le contact avec les fils métalliques (6) établi, dans une ouverture du rail de recouvrement (5).

2. Système de rail conducteur selon la revendication 1,
dans le cadre duquel au moins un contact de connexion (53) est disposé, au moyen d'un élément porteur (55), de manière réglable en hauteur, au niveau de l'élément de mise en contact (50).

3. Système de rail conducteur selon la revendication 2,
sachant que l'élément porteur (55) peut être déplacé par coulissement de manière verticale à l'intérieur de rails de guidage (56, 57).

4. Système de rail conducteur selon l'une quelconque des revendications précédentes,
dans le cadre duquel l'élément de mise en contact (50) présente, dans sa zone inférieure, deux éléments de verrouillage (52) faisant saillie latéralement.

5. Système de rail conducteur selon l'une quelconque des revendications précédentes,
dans le cadre duquel le rail de recouvrement (5) présente, dans la zone de l'élément de mise en contact (50), une entaille longitudinale, dans laquelle la manette rotative (58) peut être introduite dans une position de verrouillage vers le haut, de sorte que la manette rotative est au même niveau en bas que le rail de recouvrement (5).

6. Système de rail conducteur selon l'une quelconque des revendications précédentes,
présentant en outre
un élément en fil métallique (62) pour la mise à la terre, sachant que l'élément en fil métallique (62) est guidé dans une entaille (63) de l'élément de mise en contact (50).

7. Système de rail conducteur selon la revendication 6,
dans le cadre duquel une extrémité (62a) de l'élément en fil métallique (62) est fixée par serrage, du fait de sa forme, dans le rail de recouvrement (5).

8. Système de rail conducteur selon la revendication 7,
dans le cadre duquel l'autre extrémité (62b) de l'élément en fil métallique (62) dépasse latéralement à hauteur du fil de mise à la terre.

9. Système de rail conducteur selon l'une quelconque des revendications précédentes,
dans le cadre duquel le rail de recouvrement (5) et les profilés supports (1) sont en métal.
